# EUROPÄISCHE PATENTSCHRIFT

(11) **EP 0 759 687 B1**
(45) Veröffentlichungstag und Bekanntmachung des Hinweises auf die Patenterteilung: **12.08.1998**
(21) Anmeldenummer: 95921734.0
(22) Anmeldetag: 08.05.1995
(51) Int. Cl.: A01C 1/06

(54) **VERWENDUNG VON GELFORMULIERUNGEN ALS BEIZMITTEL**
USE OF GEL FORMULATIONS AS DRESSING AGENTS
UTILISATION DE FORMULATIONS SE PRESENTANT SOUS FORME DE GEL COMME AGENTS DESINFECTANTS

(30) Priorität: 19.05.1994 DE 4417555
(43) Veröffentlichungstag der Anmeldung: 05.03.1997
(73) Patentinhaber: BAYER AG, 51368 Leverkusen (DE)
(72) Erfinder: HEINRICH, Gunter, D-51375 Leverkusen (DE); WEBER, Erhard, D-42113 Wuppertal (DE); ZIMMERMANN, Manfred, D-40789 Monheim (DE)
(86) Internationale Anmeldenummer: EP9501734
(87) Internationale Veröffentlichungsnummer: WO9531889

(56) Entgegenhaltungen:
- EP-A- 0 449 773
- EP-A- 0 518 689
- WO-A-85/01636
- WO-A-85/02972
- DE-A- 4 220 931
- US-A- 4 808 430
- US-A- 5 254 358

## Beschreibung

Die vorliegende Erfindung betrifft die Verwendung von wasserhaltigen Gelformulierungen zur Beizung von Saatgut.

Es ist bereits bekannt geworden, Saatgut mit trockenen, pulverförmigen Zubereitungen von pestiziden Wirkstoffen in üblichen Mischern zu beizen. Nachteilig an dieser Methode ist jedoch, daß derartige Pulver an der Oberfläche des Saatgutes nur schlecht hatten und deshalb ein Teil des Wirkstoffes durch Abrieb verloren geht. Ungünstig ist auch, daß mit trockenen Pulvern gebeiztes Saatgut bei der Anwendung staubt und der Anwender dadurch belästigt oder gar gefährdet wird.

Weiterhin ist es bekannt, Saatgut zu beizen, indem man Pulverformulierungen mit Wasser vermengt und die so entstehenden Schlämmbeizen in geeigneten Apparaten mit dem Saatgut verrührt. Beeinträchtigend bei dieser Art der Saatgutbehandlung ist, daß die Mischung durch ständiges Rühren homogen gehalten werden muß, weil es sonst leicht zu Fehldosierungen kommt, die den Erfolg der Beizung in Frage stellen. Von Nachteil ist es außerdem, daß durch den Zusatz von Wasser der Feuchtigkeitsgehalt des Saatgutes steigt, wodurch die Lagerfähigkeit in manchen Fällen vermindert wird. Schließlich neigen Schlämmbeizen bei langen Mischzeiten zum Abstauben von der Oberfläche des Saatgutes, sodaß ebenso wie bei den Trockenbeizen ein Wirkstoffverlust eintreten kann.

Ferner ist bekannt, Beizen von pestiziden Wirkstoffen in Form von Lösungen, Emulsionen oder Suspensionen einzusetzen. Auch diese Methoden der Saatgutbehandlung sind aber nicht immer befriedigend. So enthalten Feuchtbeizen oft organische Lösungsmittel, die umweltbelastend sein können oder die Saatgutverträglichkeit der Beizen beeinträchtigen können. Emulsionsbeizen und Suspensionsbeizen müssen vor der Anwendung durch Zugabe von Wasser weiter verdünnt werden, damit eine ausreichend gleichmäßige Verteilung der Wirkstoffe auf dem Saatgut erzielt wird. Dieses ist vor allem beim Einsatz von Chargenmischern und bei der Hofbeizung nachteilig, weil durch den hohen Wasseranteil der Feuchtigkeitsgehalt des Saatgutes stark erhöht und daher die Lagerfähigkeit des Saatgutes erheblich eingeschränkt wird.

Außerdem bekannt ist ein Verfahren zur Saatgutbeizung, welches darin besteht, daß man das Saatgut zunächst mit einer wäßrigen Zubereitung vermischt, die mindestens ein Pyrethroid und mindestens ein Bindemittel enthält, und anschließend mit mindestens einem pulverförmigen Fungizid behandelt (vgl. DE-OS 4 220 931). Diese Beizmethode liefert gute Ergebnisse, ist aber relativ aufwendig, da die Saatgutbehandlung in zwei Schritten erfolgt.

Im übrigen wurden schon gelförmige Pestizid-Formulierungen und deren Einsatz zur Herstellung wäßriger Spritzbrühen beschrieben (vgl. EP-OS 0 449 773 und EP-OS 0 518 689). Eine Verwendung von Gelen zur Beizung von Saatgut wird aber nicht erwähnt.

Es wurde nun gefunden, daß sich Gelformulierungen, deren Viskosität oberhalb von 5 000 Cps liegt und die
- mindestens einen zum Beizen von Saatgut geeigneten Wirkstoff,
- mindestens einen Gelbildner,
- Wasser und
- Zusatzstoffe
   enthalten, zur Beizung von Saatgut verwenden lassen.

Es ist als äußerst überraschend zu bezeichnen, daß sich die erfindungsgemäßen Gelformulierungen zum Beizen von Saatgut einsetzen lassen. Aufgrund des vorbekannten Standes der Technik war nämlich anzunehmen, daß Gele nicht genügend gleichmäßig und abriebfest auf Saatgut auftragbar sind. Im Gegensatz zu den Erwartungen erzeugen die erfindungsgemäß verwendbaren Gele auf den Körnern des Saatgutes aber einen gut haftenden Belag, der auch mechanischen Beanspruchungen in ausreichendem Maße standhält.

Die erfindungsgemäße Verwendung von Gelformulierungen zeichnet sich durch eine Reihe von Vorteilen aus. So ist vor dem Einsatz der Gele keine weitere Verdünnung mit Wasser erforderlich. Der Feuchtigkeitsgehalt des Saatgutes wird also nicht merklich erhöht, und die Lagerfähigkeit des behandelten Materials bleibt erhalten. Da die Gele sich außerdem auf der Oberfläche des Saatgutes ausreichend gleichmäßig verteilen und ausgezeichnet haften, treten kaum Wirkstoffverluste durch Abrieb auf. Besonders vorteilhaft ist auch, daß sich die gelförmigen Beizen exakt in der jeweils gewünschten Menge einsetzen lassen, sodaß Fehldosierungen vermieden werden können. Weiterhin ist zu erwähnen, daß die gelförmigen Beizen breit anwendbar sind. Sie können sowohl zur Saatgutbehandlung in Chargenmischern, wie zum Beispiel Beiztrommeln, Betonmischern und ähnlichen Apparaten, als auch in schnell laufenden Mischern, wie sie in Bereichen des technischen Mischens oder zum Anmischen von Futtermitteln üblich sind, problemlos eingesetzt werden.

In den erfindungsgemäß verwendbaren Gelformulierungen sind einer oder mehrere zum Beizen von Saatgut geeignete Wirkstoffe enthalten. Als solche Wirkstoffe kommen alle üblichen, zur Behandlung von Saatgut geeigneten Fungizide, Insektizide, Akarizide, Nematizide, Pflanzenwuchsregulatoren und Vogelrepellents in Betracht.

Als Beispiele für Fungizide seien hierbei genannt:
2-Aminobutan; 2-Anilino-4-methyl-6-cyclopropyl-pyrimidin; 2',6'-Dibromo-2-methyl-4'-trifluoromethoxy-4'-trifluoromethyl-1,3-thiazol-5-carboxanilid; 2,6-Dichlor-N-(4-trifluoromethylbenzyl)-benzamid; (E)-2-Methoximino-N-methyl-2-(2-phenoxyphenyl)-acetamid; 8-Hydroxychinolinsulfat; Methyl-(E)-2-{2-[6-(2-cyanophenoxy)-pyrimidin-4-yloxy]-phenyl}-3-methoxyacrylat; Methyl-(E)-methoximino [alpha-(o-tolyloxy)-o-tolyl]-acetat; 2-Phenylphenol (OPP), Aldimorph, Ampropylfos, Anilazin, Azaconazol,
Benalaxyl, Benodanil, Benomyl, Binapacryl, Biphenyl, Bitertanol, Blasticidin-S, Bromuconazole, Bupirimate, Buthiobate,
Calciumpolysulfid, Captafol, Captan, Carbendazim, Carboxin, Chinomethionat (Quinomethionat), Chloroneb, Chloropicrin, Chlorothalonil, Chlozolinat, Cufraneb, Cymoxanil, Cyproconazole, Cyprofuram,
Dichlorophen, Diclobutrazol, Diclofluanid, Diclomezin, Dicloran, Diethofencarb, Difenoconazol, Dimethirimol, Dimethomorph, Diniconazol, Dinocap, Diphenylamin, Dipyrithion, Ditalimfos, Dithianon, Dodine, Drazoxolon,
Edifenphos, Epoxyconazole, Ethirimol, Etridiazol,
Fenarimol, Fenbuconazole, Fenfuram, Fenitropan, Fenpiclonil, Fenpropidin, Fenpropimorph, Fentinacetat, Fentinhydroxyd, Ferbam, Ferimzone, Fluazinam, Fludioxonil, Fluoromide, Fluquinconazole, Flusilazole, Flusulfamide, Flutolanil, Flutriafol, Folpet, Fosetyl-Aluminium, Fthalide, Fuberidazol, Furalaxyl, Furmecyclox,
Guazatine,
Hexachlorobenzol, Hexaconazol, Hymexazol,
Imazalil, Imibenconazol, Iminoctadin, Iprobenfos (IBP), Iprodion, Isoprothiolan, Kasugamycin, Kupfer-Zubereitungen, wie: Kupferhydroxid, Kupfernaphthenat, Kupferoxychlorid, Kupfersulfat, Kupferoxid, Oxin-Kupfer und Bordeaux-Mischung,
Mancopper, Mancozeb, Maneb, Mepanipyrim, Mepronil, Metalaxyl, Metconazol, Methasulfocarb, Methfuroxam, Metiram, Metsulfovax, Myclobutanil, Nickel-dimethyldithiocarbamat, Nitrothal-isopropyl, Nuarimol, Ofurace, Oxadixyl, Oxamocarb, Oxycarboxin,
Pefurazoat, Penconazol, Pencycuron, Phosdiphen, Pimaricin, Piperalin, Polyoxin, Probenazol, Prochloraz, Procymidon, Propamocarb, Propiconazole, Propineb, Pyrazophos, Pyrifenox, Pyrimethanil, Pyroquilon,
Quintozen (PCNB),
Schwefel und Schwefel-Zubereitungen,
Tebuconazol, Tecloftalam, Tecnazen, Tetraconazol, Thiabendazol, Thicyofen, Thiophanat-methyl, Thiram, Tolclophos-methyl, Tolylfluanid, Triadimefon, Triadimenol, Triazoxid, Trichlamid, Tricyclazol, Tridemorph, Triflumizol, Triforin, Triticonazol,
Validamycin A, Vinclozolin,
Zineb, Ziram.

Als Beispiele für Insektizide, Akarizide und Nematizide seien genannt:

Abamectin, Abamectin, AC 303 630, Acephat, Acrinathrin, Alanycarb, Aldicarb, Alphamethrin, Amitraz, Avermectin, AZ 60541, Azadirachtin, Azinphos A, Azinphos M, Azocyclotin,
Bacillus thuringiensis, Bendiocarb, Benfuracarb, Bensultap, Betacyluthrin, Bifenthrin, BPMC, Brofenprox, Bromophos A, Bufencarb, Buprofezin, Butocarboxin, Butylpyridaben,
Cadusafos, Carbaryl, Carbofuran, Carbophenothion, Carbosulfan, Cartap, CGA 157 419, CGA 184699, Chloethocarb, Chlorethoxyfos, Chlorfenvinphos, Chlorfluazuron, Chlormephos, Chlorpyrifos, Chlorpyrifos M, Cis-Resmethrin, Clocythrin, Clofentezin, Cyanophos, Cycloprothrin, Cyfluthrin, Cyhalothrin, Cyhexatin, Cypermethrin, Cyromazin,
Deltamethrin, Demeton M, Demeton S, Demeton-S-methyl, Diafenthiuron, Diazinon, Dichlofenthion, Dichlorvos, Dicliphos, Dicrotophos, Diethion, Diflubenzuron, Dimethoat,
Dimethylvinphos, Dioxathion, Disulfoton,
Edifenphos, Emamectin, Esfenvalerat, Ethiofencarb, Ethion, Ethofenprox, Ethoprophos, Etrimphos,
Fenamiphos, Fenazaquin, Fenbutatinoxid, Fenitrothion, Fenobucarb, Fenothiocarb, Fenoxycarb, Fenpropathrin, Fenpyrad, Fenpyroximat, Fenthion, Fenvalerate, Fipronil, Fluazinam, Flucycloxuron, Flucythrinat, Flufenoxuron, Flufenprox, Fluvalinate, Fonophos, Formothion, Fosthiazat, Fubfenprox, Furathiocarb, HCH, Heptenophos, Hexaflumuron, Hexythiazox,
Imidacloprid, Iprobenfos, Isazophos, Isofenphos, Isoprocarb, Isoxathion, Ivemectin, Lamda-cyhalothrin, Lufenuron,
Malathion, Mecarbam, Mervinphos, Mesulfenphos, Metaldehyd, Methacrifos, Methamidophos, Methidathion, Methiocarb, Methomyl, Metolcarb, Milbemectin, Monocrotophos, Moxidectin,
Naled, NC 184, NI 25, Nitenpyram
Omethoat, Oxamyl, Oxydemethon M, Oxydeprofos,
Parathion A, Parathion M, Permethrin, Phenthoat, Phorat, Phosalon, Phosmet, Phosphamdon, Phoxim, Pirimicarb, Pirimiphos M, Pirimiphos A, Profenofos, Promecarb, Propaphos, Propoxur, Prothiofos, Prothoat, Pymetrozin, Pyrachlophos, Pyradaphenthion, Pyresmethrin, Pyrethrum, Pyridaben, Pyrimidifen, Pyriproxifen, Quinalphos,
RH 5992,
Salithion, Sebufos, Silafluofen, Sulfotep, Sulprofos,
Tebufenozid, Tebufenpyrad, Tebupirimphos, Teflubenzuron, Tefluthrin, Temephos, Terbam, Terbufos, Tetrachlorvinphos, Thiafenox, Thiodicarb, Thiofanox, Thiomethon, Thionazin, Thuringiensin, Tralomethrin, Triarathen, Triazophos, Triazuron, Trichlorfon, Triflumuron, Trimethacarb,
Vamidothion, XMC, Xylylcarb, Zetamethrin.

Als Beispiele für einen Pflanzenwuchsregulator sei im vorliegenden Zusammenhang Chlormequat genannt.

Als Beispiele für Vogelrepellents, die in den erfindungsgemäß verwendbaren Gelformulierungen enthalten sein können, seien Anthrachinon und Methiocarb genannt.

Die erfindungsgemäß verwendbaren Gelformulierungen enthalten einen oder mehrere Gelbildner. Als Gelbildner kommen dabei alle üblichen, saatgutverträglichen und zur Herstellung von Gelen geeigneten Stoffe in Betracht. Vorzugsweise verwendbar sind organische Polymere wie Agar, Alginate, Alkyl- und Hydroxyalkylcellulose, Carragheenan, Carboxymethylcellulose, Gelatine, Gum Guar, Gummi arabicum, Gum Ghatti, Gum karaya, Gum traganth, Hydroxyethylcellulose, Hydroxypropylcellulose, Locust bean gum (Johannisbrotkernmehl), Pektine, Polyacrylamide, Polyacrylsäure und ihre Salze, Polyethylenglykole, Polyvinylalkohole, Polyvinylpyrrolidone und deren Copolymerisate mit Polyvinylacetat, Stärke und Xanthan, sowie auch anorganische Gelbildner, wie Smektite und Bentonite.

Die erfindungsgemäß verwendbaren Gelformulierunngen enthalten weiterhin Wasser und einen oder mehrere Zusatzstoffe. Als Zusatzstoffe kommen dabei alle üblichen, in Beizmitteln einsetzbaren Komponenten in Betracht, wie zum Beispiel Farbstoffe, Netzmittel, Dispergiermittel, Emulgatoren, Entschäumer, Konservierungsmittel, eintrocknungsverzögernde Komponenten, Gefrierschutzmittel, sekundäre Verdickungsmittel, Lösungsmittel, Salze und Säuren.

Als Farbstoffe, die in den erfindungsgemäß verwendbaren Gelformulierungen vorhanden sein können, kommen alle für derartige Zwecke üblichen Farbstoffe in Betracht. Dabei sind sowohl in Wasser wenig lösliche Pigmente als auch in Wasser lösliche Farbstoffe verwendbar. Als Beispiele genannt seinen die unter den Bezeichnungen Rhodamin B, C.I. Pigment Red 112 und C.I. Solvent Red 1 bekannten Farbstoffe.

Als Netzmittel, die in den erfindungsgemäß verwendbaren Gelformulierungen enthalten sein können, kommen alle zur Formulierung von Pestiziden üblichen, die Benetzung fördernden Stoffe in Frage. Vorzugsweise verwendbar sind Alkylnaphthalin-Sulfonate, wie Diisopropyl- oder Diisobutyl-naphthalin-Sulfonate.

Als Dispergiermittel und/oder Emulgatoren, die in den erfindungsgemäß verwendbaren Gelformulierungen enthalten sein können, kommen alle zur Formulierung von Pestiziden üblichen nichtionischen, anionischen und kationischen Dispergiermittel in Betracht. Vorzugsweise verwendbar sind nichtionische oder anionische Dispergiermittel oder Gemische von nichtionischen oder anionischen Dispergiermitteln. Als geeignete nichtionische Dispergiermittel sind insbesondere Ethylenoxid-Propylenoxid Blockpolymere, Alkylphenolpolyglykolether sowie Tristryrylphenolpolyglykolether und deren phosphatierte oder sulfatierte Derivate zu nennen. Geeignete anionische Dispergiermittel sind insbesondere Ligninsulfonate, Polyacrylsäuresalze und Arylsulfonat-Formaldehydkondensate.

Als Entschäumer können in den erfindungsgemäß verwendbaren Gelformulierungen alle zur Formulierung von Pestiziden üblichen schaumhemmenden Stoffe enthalten sein. Vorzugsweise verwendbar sind Silikonentschäumer und Magnesiumstearat.

Als Konservierungsmittel können in den erfindungsgemäß verwendbaren Gelformulierungen alle für derartige Zwecke in pestiziden Mitteln einsetzbaren Stoffe vorhanden sein. Beispielhaft genannt seien Dichlorophen und Benzylalkoholhemiformal.

Als eintrocknungsverzögernde Komponenten und als Gefrierschutzmittel, die in den erfindungsgemäß verwendbaren Gelformulierungen enthalten sein können, kommen alle für derartige Zwecke in pestiziden Mitteln einsetzbaren Stoffe in Betracht. Vorzugsweise in Frage kommen mehrwertige Alkohole, wie Glycerin, Ethandiol, Propandiol und Polyethylenglykole verschiedener Molekulargewichte.

Als sekundäre Verdickungsmittel, die in den erfindungsgemäß verwendbaren Gelformulierungen enthalten sein können, kommen alle für derartige Zwecke in pestiziden Mitteln einsetzbaren Stoffe in Frage. Vorzugsweise in Betracht kommen Cellulosederivate, Acrylsäurederivate, Xanthan, modifizierte Tone und hochdisperse Kieselsäure.

Als Lösungsmittel, die in den erfindungsgemäß verwendbaren Gelformulierungen enthalten sein können, kommen alle in pestiziden Mitteln einsetzbaren organischen Solventien in Betracht. Vorzugsweise in Frage kommen Ketone, wie Methyl-isobutyl-keton und Cyclohexanon, ferner Amide, wie Dimethylformamid, weiterhin cyclische Verbindungen, wie N-Methyl-pyrrolidon, N-Octyl-pyrrolidon, N-Dodecyl-pyrrolidon, N-Octyl-caprolactam, N-Dodecyl-caprolactam und γ-Butyrolacton, darüber hinaus stark polare Solventien, wie Dimethylsulfoxid, ferner aromatische Kohlenwasserstoffe, wie Xylol, außerdem Ester, wie Propylenglykolmonomethylether-acetat, Adipinsäure-dibutylester, Essigsäurehexylester, Essigsaure-heptylester, Zitronensäure-tri--n-butylester, Phthalsäure-diethylester und Phthalsäure-di-n-butylester, und weiterhin Alkohole, wie Ethanol, n- und i-Propanol, n- und i-Butanol, n- und i-Amylalkohol, Benzylalkohol und 1-Methoxy-2-propanol.

Als Salze können in den erfindungsgemäß verwendbaren Gelformulierungen alle üblicherweise in pestiziden Mitteln vorhandenen oder für die Herstellung von Gelen einsetzbaren Salze enthalten sein. Vorzugsweise in Betracht kommen Natriumchlorid und Borax.

Als Säuren können in den erfindungsgemäß verwendbaren Gelformulierungen alle überlicherweise in pestiziden Mitteln vorhandenen oder für die Herstellung von Gelen einsetzbaren anorganischen und organischen Säuren enthalten sein. Vorzugsweise in Betracht kommen aliphatische und aromatische Hydroxycarbonsäuren, wie Citronensäure, Salicylsäure, Weinsäure und Ascorbinsäure, sowie anorganische Säuren, wie verdünnte Salzsäure oder verdünnte Schwefelsäure.

Die Konzentrationen an den einzelnen Komponenten können in den erfindungsgemäß verwendbaren Gelformulierungen innerhalb eines bestimmten Bereiches variiert werden. Im allgemeinen liegen die Wirkstoffkonzentrationen zwischen 0,1 und 80.. Gew.-%, vorzugsweise zwischen 0,5 und 60 Gew.-%. Die Konzentration an Gelbildnern liegt im allgemeinen zwischen 0,1 und 10 Gew.-%, vorzugsweise zwischen 0,5 und 5 Gew.-%. Die Konzentration an Zusatzstoffen liegt im allgemeinen zwischen 1 und 30 Gew.-%, vorzugsweise zwischen 2 und 28 Gew.-%. Der jeweils verbleibende Teil der erfindungsgemäß verwendbaren Gelformulierungen besteht aus Wasser.

Die Herstellung der erfindungsgemäß verwendbaren Gelformulierungen erfolgt nach üblichen Methoden. Im allgemeinen geht man so vor, daß man wäßrige Lösungen, Suspensionen oder Öl-in-Wasser-Emulsionen von Wirkstoffen und Zusatzstoffen unter intensivem Rühren mit Gelbildnern, gegebenenfalls unter Zugabe von Salzen und/oder Säuren versetzt.

Die Temperaturen können bei der Herstellung der erfindungsgemäß verwendbaren Gelformulierungen innerhalb eines bestimmten Bereiches variiert werden. Im allgemeinen arbeitet man bei Temperaturen zwischen 10°C und 80°C, vorzugsweise zwischen 20°C und 70°C.

Die mit einem Brookfield-Viskosimeter bei 30 Umdrehungen pro Minute gemessenen Viskositäten der erfindungsgemäß verwendbaren Gelformulierungen liegen bei mindestens 5 000 cps, vorzugsweise oberhalb von 15 000 cps.

Mit den erfindungsgemäß verwendbaren Gelformulierungen kann Saatgut der verschiedensten Art behandelt werden. So lassen sich die erfindungsgemäß verwendbaren Gelformulierungen einsetzen zur Beizung des Saatgutes von Getreide, wie Weizen, Gerste, Roggen, Hafer und Triticale, sowie des Saatgutes von Mais, Raps, Erbsen, Ackerbohnen, Baumwolle, Sonnenblumen und Rüben oder auch von Gemüsesaatgut der verschiedensten Natur.

Zur Behandlung von Saatgut mit den eriindungsgemäß verwendbaren Gelformulierungen kommen alle üblicherweise für die Beizung einsetzbaren Mischgeräte in Betracht. Im einzelnen geht man bei der Beizung so vor, daß man das Saatgut in einen Mischer gibt, die jeweils gewünschte Menge an erfindungsgemäß verwendbarer Gelformulierung hinzufügt und bis zur gleichmäßigen Verteilung der Formulierung auf dem Saatgut mischt.

Die Herstellung und der Einsatz der erfindungsgemäß verwendbaren Gelformulierungen gehen aus den folgenden Beispielen hervor.

### Herstellungsbeispiele

### Beispiel 1

Eine durch Naßmahlung hergestellte Suspension aus
- 15,0 g: Triadimenol,
- 2,0 g: des Farbstoffes mit der Bezeichnung C.I. Solvent Red 1
- 2,0 g: Tri-(methylstyryl)-phenolethoxylat mit durchschnittlich 29 Ethylenoxid-Einheiten pro Molekül,
- 0,1 g: Silikonentschäumer,
- 0,1 g: Benzylalkohol-hemiformal,
- 2,0 g: hochdisperser Kieselsäure und
- 83,0 g: Wasser
wird bei Raumtemperatur unter Rühren mit
- 0,5 g: Natriumchlorid und
- 1,0 g: iota Carragheenan
versetzt. Man erhitzt das Gemisch unter Rühren auf 60°C. Die dabei entstehende dünnflüssige Suspension wird in ein Vorratsgefäß gefüllt, wo sich beim Abkühlen auf Raumtemperatur ein Gel bildet.

### Beispiel 2

In eine durch Naßmahlung hergestellte Suspension der im Beispiel 1 angegebenen Zusammensetzung werden bei Raumtemperatur unter Rühren
- 0,5 g: Borax und
- 0,75 g: Gum Guar
gegeben. Anschließend wird das Gemisch mit einem Ultraturrax-Rührer homogenisiert und in ein Vorratsgefäß gefüllt. Beim Stehenlassen bei Raumtemperatur bildet sich ein Gel.

### Beispiel 3

In eine durch Naßmahlung hergestellte Suspension der im Beispiel 1 angegebenen Zusammensetzung werden bei Raumtemperatur unter Rühren
- 1 g: Natriumalginat
gegeben. Anschließend fügt man unter intensivem Rühren bei Raumtemperatur langsam soviel verdünnte Schwefelsäure hinzu, bis ein pH-Wert von 3,5 erreicht ist. Das Gemisch wird in ein Vorratsgefäß gefüllt, wo sich beim Stehenlassen bei Raumtemperatur ein Gel bildet.

### Beispiel 4

Eine durch Naßmahlung hergestellte Suspension aus
- 15,0 g: Triadimenol,
- 2,0 g: des Farbstoffes mit der Bezeichnung C.I. Solvent Red 1
- 2,0 g: Tri-(methylstyryl)-phenolethoxylat mit durchschnittlich 29 Ethylenoxid-Einheiten pro Molekül,
- 0,1 g: Silikonentschäumer,
- 0,1 g: Benzylalkohol-hemiformal,
- 20,0 g: Glycerin,
- 2,0 g: hochdisperser Kieselsäure und
- 63,0 g: Wasser
wird bei Raumtemperatur unter Rühren mit
- 0,5 g: Natriumchlorid und
- 1,0 g: iota Carragheenan
versetzt. Man erhitzt das Gemisch unter Rühren auf 60°C. Die dabei entstehende dünnflüssige Suspension wird in ein Vorratsgefäß gefüllt, wo sich beim Abkühlen auf Raumtemperatur ein Gel bildet.

### Beispiel 5

Eine durch Naßmahlung hergestellte Suspension der im Beispiel 4 angegebenen Zusammetzung, in der jedoch an Stelle von Glycerin 20,0 g Propandiol-1,2 enthalten sind, wird bei Raumtemperatur unter Rühren mit
- 0,5 g: Natriumchlorid und
- 1,0 g: iota Carragheenan
versetzt. Man erhitzt das Gemisch unter Rühren auf 60°C. Die dabei entstehende dünnflüssige Suspension wird in ein Vorratsgefäß gefüllt, wo sich beim Abkühlen auf Raumtemperatur ein Gel bildet.

### Beispiel 6

Eine durch Naßmahlung hergestellte Suspension der im Beispiel 4 angegebenen Zusammensetzung, in der jedoch an Stelle von Glycerin 20,0 g Polyethylenglykol 400 enthalten sind, wird bei Raumtemperatur unter Rühren mit
- 0,5 g: Natriumchlorid und
- 1,0 g: iota Carragheenan
versetzt. Man erhitzt das Gemisch unter Rühren auf 60°C. Die dabei entstehende dünnflüssige Suspension wird in ein Vorratsgefäß gefüllt, wo sich beim Abkühlen auf Raumtemperatur ein Gel bildet.

### Beispiel 7

Eine durch Naßmahlung hergestellte Suspension aus
- 35,0 g: Bitertanol,
- 0,5 g: des Farbstoffes mit der Bezeichnung C.I. Solvent Red 1,
- 1,0 g: Tristyrylphenolethoxylat mit durchschnittlich 29 Ethylenoxid-Einheiten pro Molekül,
- 0,1 g: Silikonentschäumer,
- 20,0 g: Polyethylenglykol 400,
- 0,5 g: Natriumchlorid,
- 0,1 g: Benzylalkohol-hemiformal und
- 45,0 g: Wasser
wird bei Raumtemperatur unter Rühren mit 1,0 g iota Carragheenan versetzt. Man erhitzt das Gemisch unter Rühren auf 60°C. Die dabei entstehende dünnflüssige Suspension wird in ein Vorratsgefäß gefüllt, wo sich beim Abkühlen auf Raumtemperatur ein Gel bildet.

### Beispiel 8

Eine durch Naßmahlung hergestellte Suspension aus
- 20,0 g: Imidacloprid,
- 2,0 g: des Farbstoffes mit der Bezeichnung C.I. Pigment Red 57:1,
- 1,0 g: Tristyrylphenolethoxylat mit durchschnittlich 54 Ethylenoxid-Einheiten pro Molekül,
- 20,0 g: Polyethylenglykol 400,
- 0,5 g: Natriumchlorid und
- 67,0 g: Wasser
wird bei Raumtemperatur unter Rühren mit 10,0 g einer 2 %igen, wäßrigen Xanthan-Lösung versetzt. Danach wird unter Rühren bei Raumtemperatur 1,0 g iota Carragheenan hinzugefügt. Man erhitzt das Gemisch auf 60°C. Die dabei entstehende dünnflüssige Suspension wird in ein Vorratsgefäß gefüllt, wo sich beim Abkühlen auf Raumtemperatur ein Gel bildet.

### Beispiel 9

Eine Emulsion aus
- 3,75 g: Cyfluthrin,
- 0,3 g: Rhodamin B,
- 6,0 g: Phthalsäure-diethylester,
- 1,13 g: Polyvinylalkohol,
- 3,0 g: Glycerin und
- 74,3 g: Wasser
wird bei Raumtemperatur unter Rühren mit
- 0,3 g: Natriumchlorid und
- 1,0 g: iota Carragheenan
versetzt. Man erhitzt das Gemisch unter Rühren auf 60°C. Die dabei entstehende dünnflüssige Mischung wird in ein Vorratsgefäß gefüllt, wo sich beim Abkühlen auf Raumtemperatur ein Gel bildet.

### Verwendungsbeispiele

### Beispiel I

In einer Beiztrommel werden 100 kg Weizen mit 500 ml der Gelformulierung gemäß Beispiel 7 versetzt und 3 Minuten lang gemischt. Man erhält auf diese Weise ein Saatgut, auf dessen Oberfläche das Gel gleichmäßig verteilt ist.

### Beispiel II

In einer Beiztrommel werden 100 kg Weizen mit 250 ml der Gelformulierung gemäß Beispiel 8 versetzt und 3 Minuten lang gemischt. Man erhält auf diese Weise ein Saatgut, auf dessen Oberfläche das Gel gleichmäßig verteilt ist.

### Beispiel III

In einer Beiztrommel werden 100 kg Weizen mit 500 ml der Gelformulierung gemäß Beispiel 9 versetzt und 3 Minuten lang gemischt. Man erhält auf diese Weise ein Saatgut, auf dessen Oberfläche das Gel gleichmäßig verteilt ist.

## Patentansprüche

1. Verwendung von Gelformulierungen,
deren Viskosität oberhalb von 5000 cps liegt und die
- mindestens einen zum Beizen von Saatgut geeigneten Wirkstoff,
- mindestens einen Gelbildner,
- Wasser und
- Zusatzstoffe
enthalten, zur Beizung von Saatgut.

2. Verwendung gemäß Anspruch 1, dadurch gekennzeichnet, daß man Gelformulierungen einsetzt, die mindestens einen fungiziden Wirkstoff enthalten.

3. Verwendung gemäß Anspruch 1, dadurch gekennzeichnet, daß man Gelformulierungen einsetzt, die mindestens einen insektiziden Wirkstoff enthalten.

4. Verwendung gemäß Anspruch 1, dadurch gekennzeichnet, daß man Gelformulierungen einsetzt, die als Gelbildner mindestens ein organisches Polymer enthalten.

5. Verwendung gemäß Anspruch 1, dadurch gekennzeichnet, daß man Gelformulierungen einsetzt, die Carragheenan als Gelbildner enthalten.

## Claims

1. Use of gel formulations which have a viscosity above 5000 cps and which comprise
- at least one active compound suitable for dressing seed,
- at least one gel-forming agent,
- water and
- additives
for dressing seed.

2. Use according to Claim 1, characterized in that gel formulations which comprise at least one fungicidal active compound are employed.

3. Use according to Claim 1, characterized in that gel formulations which comprise at least one insecticidal active compound are employed.

4. Use according to Claim 1, characterized in that gel formulations which comprise at least one organic polymer as the gel-forming agent are employed.

5. Use according to Claim 1, characterized in that gel formulations which comprise carragheenan as the gel-forming agent are employed.

## Revendications

1. Utilisation de formulations sous forme de gel, dont la viscosité est supérieure à 5000 cps et qui contiennent
- au moins une substance active convenant pour la désinfection de semences,
- au moins un agent gélifiant,
- de l'eau et
- des additifs
pour la désinfection de semences.

2. Utilisation suivant la revendication 1, caractérisée en ce qu'on utilise des formulations sous forme de gel qui contiennent au moins une substance douée d'activité fongicide.

3. Utilisation suivant la revendication 1, caractérisée en ce qu'on utilise des formulations sous forme de gel qui contiennent au moins une substance douée d'activité insecticide.

4. Utilisation suivant la revendication 1, caractérisée en ce qu'on utilise des formulations sous forme de gel qui contiennent comme gélifiant au moins un polymère organique.

5. Utilisation suivant la revendication 1, caractérisée en ce qu'on utilise des formulations sous forme de gel qui contiennent comme gélifiant du carraghénane.
